# EUROPEAN PATENT APPLICATION

(11) **EP 1 704 796 A1**
(43) Date of publication of application: **27.09.2006**
(21) Application number: 02009815.8
(22) Date of filing: 23.11.2002
(51) Int. Cl.: A45F 5/00, A45C 1/04

(54) **Wrist band cellular holder**

(71) Applicant: Kon Woryz Corp., Brooklyn, NY 11217 (US)
(72) Inventor: Ottah, Chikezie Kon Woryz Corporation, 11217 Brooklyn, New York (US); Ottah, Chineye Kon Woryz Corporation, 11217 Brooklyn, New York (US)
(74) Representative: Copp, David Christopher

(57) **Abstract**

Spot-talk is a hands free wrist band cellular phone holder. Spot-talk is made to take in and reflect the sizes and shapes of the phones it holds with the unmarked and distinctive wrist band holder. Spot-talk is a phone holder that is wear on the wrist. Spot-talk give the user an advantage in phone usage that is impossible without it, total concentration, total visibility due to the user is on control not in your blind spot like others where the users have to look other directions and spot-talk can adapt other environments without change in instruments like from a car to riding a bike, motor cycle, walkin-talkin, industrial worker, boating, campers, police officers, students, young mother, or nanny pushing their babe in a stroller, in a bus, train, or sporting activity. Spot-talk offer the best use of the cellular phone camera, internet and E-mails.

## Description

Spot-talk is made from leather, leatherette, plastic, cloths, and valcro. Spot-talk is a hands free wrist band cellular phone p c s holder.

Spot-talk is made to be wear on a wrist, at the wrist the cellular phone is banded and could be use with a flick of an arm, it save the user from the dangers of lack of concentrations due to looking left, or right, and, or looking down, or up, sideways or backward to answer or receive a call, or make a call. At the wrist, spot-talk help the user fulfill what the cellular phone is meant for, that is for people's freedom and responsibility.

With the increasing and upgrading of the cellular phone p c s from mobile phone to voice and video, E-mail, internet, and camera, spot-talk provide the best use in this environments without changes of instruments, total concentration, and total control to the users and still be a hands free cellular phone.

Spot-talk provide a total concentration and a total visibility spot not a blind spot to a car driver, bike rider, motor cycle rider, boating, to a nanny or a mother pushing her child on a stroller, industrial worker, camper, police officers, students, sporting activities, inside a bus, train, and walking and talking.

Spot-talk is a hands free wrist band cellular phone holder. Spot-talk is made to take in and reflect the sizes and shapes of the phones it holds with the unmarked and distinctive wrist band holder. Spot-talk is a phone holder that is wear on the wrist. Spot-talk give the user an advantage in phone usage that is impossible without it, total concentration, total visibility due to the user is on control not in your blind spot like others where the users have to look other directions and spot-talk can adapt other environments without change in instruments like from a car to riding a bike, motor cycle, walkin-talkin, industrial worker, boating, campers, police officers, students, young mother, or nanny pushing their babe in a stroller, in a bus, train, or sporting activity. Spot-talk offer the best use of the cellular phone camera, internet and E-mails.

### Background of invention

Spot-talk is a hands free wrist band cellular phone holder. The rest of hands free cellular phone holders are one dimensional, the other hands free cellular phone p c s holders can only be use by plugged into a car cigarette lighter only, but Spot-talk is a wrist band cellular phone holder, Spot-talk is only a flick of an arm to be used, with another flick a spot-talk user will start using the cellular phone camera, e-mail, play games, internet etc. Spot-talk increase your visibility spot not your blind spot, and easy to use in other environments like driving, riding bus, train, bike, motor cycle, boating, campers, police officers, nanny pushing a babe's strollers and trying to cross the street, industrial worker, and student.

### The summery of invention

European patent app. #02009815.8

Spot-talk a hands free cellular phone holder, spot-talk provide and foster those freedom that cellular phone is intended to provide to its customers. The invention if use with cellular phone p c s make all transition possible, a transition from a car to a bike, or to an office can be completed quick and faster, and only spot-talk can provide that transition with total risk free. With the increasing and upgrading of the cellular phone p c s from mobile phone to E-mail, voice and video, games, internet and camera, spot-talk provide the best use in this environments without changes of instruments, total concentrations, and total control to the user.

### How to make Spot-talk;

Instruments: a pair of scissors, tape measure, chalk, crayon, sewing machine, needles, twine, leatherette, plastic, cloth, valcrol, and a table.

The method this various styles of regular cellular phones holders are made to reflect the sizes and shapes of the phones it holds with the unmarked and distinctive wrist band holder is through the measurement of the lengths, measure the heights of the lengths, then measure the widths, and measure the heights of the widths. Measure the distinctive and unmarked wrist band holder on both sides of the length, the wrist band holder's measurement would be based on the weights and sizes of a cellular phone.

When the above mentioned is done, then from the width of the cellular phone flip the phone one time, then measure the phone's lengths and widths, no heights, this is the top part of spot-talk, if it is all leather, or leatherette, or cloth, there should be another measurement of all the communication punch buttons, and the bottom and any side connectors should be punched or leave open or attach a pad on it. Then the cut-off parts is folded lengthwise and sewed and the wrist holders get valcro sewed into it. When all this are done, the cellular phone holder will look like the shape of spot-talk, with a wing like an air plane.

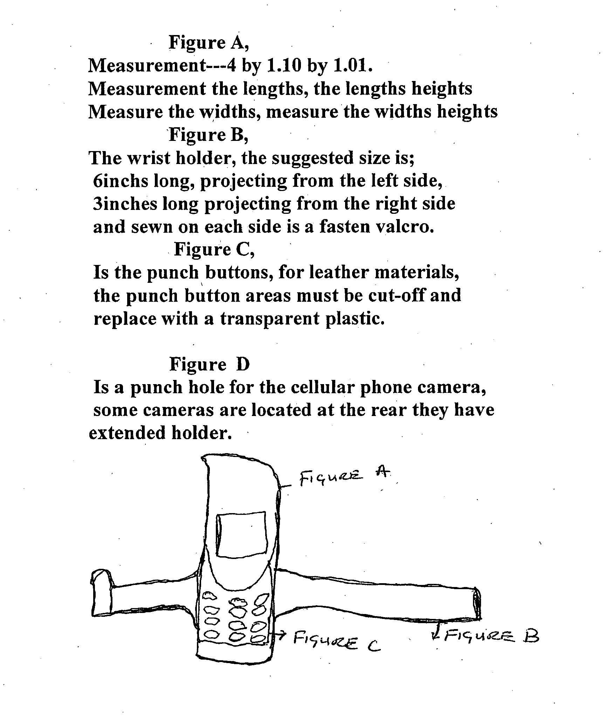

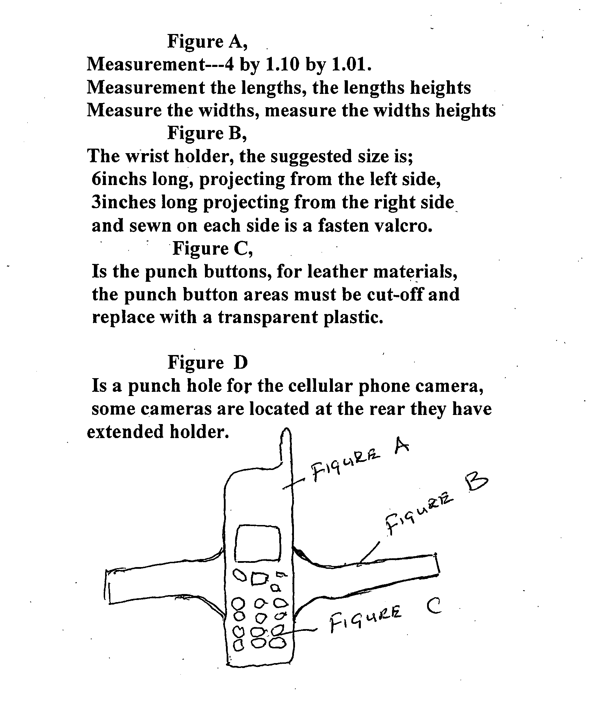

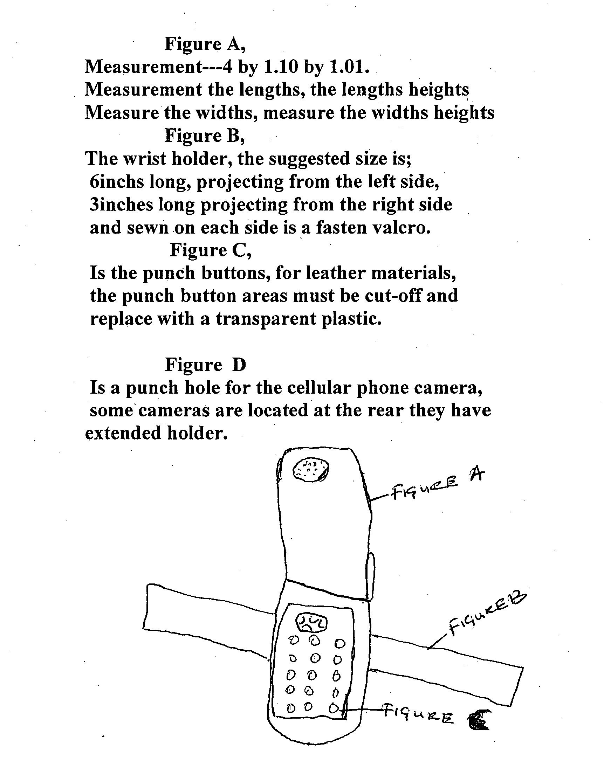

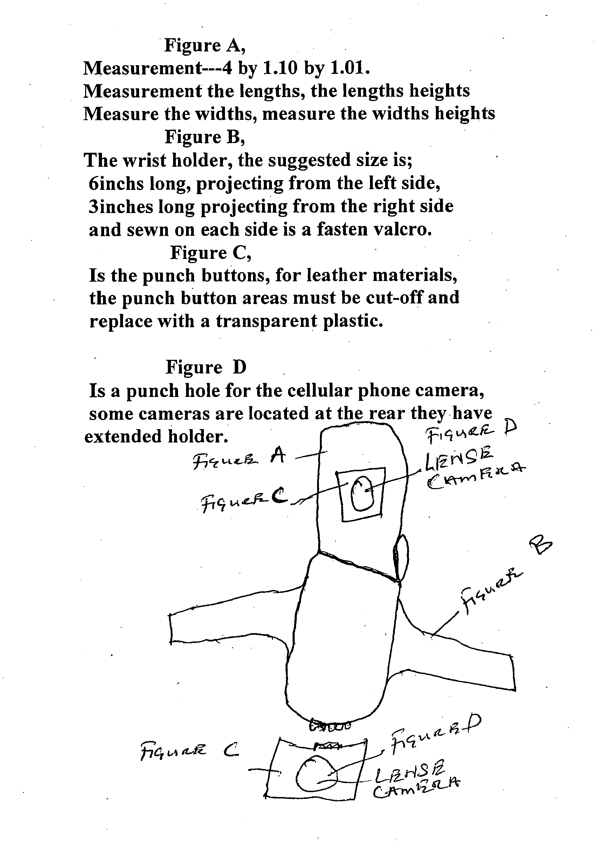

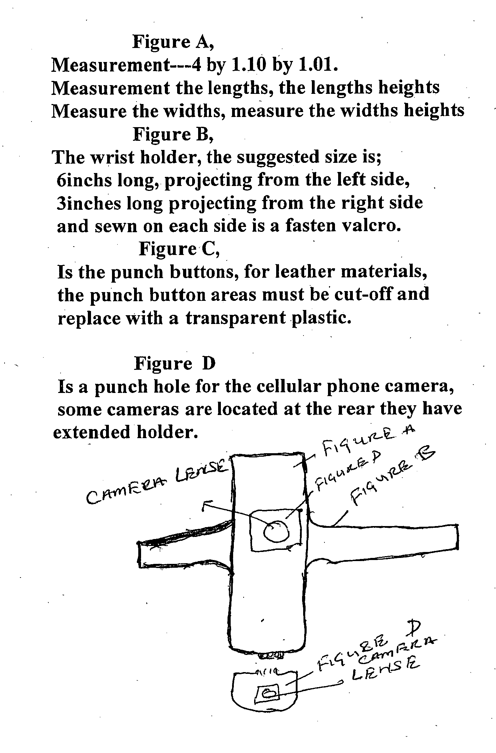

## Claims

1. Spot-talk is a hands free wrist band cellular holder.

2. Spot-talk is shape like an air plane, the body hold the phone, and the shape like wings fasten at the wrist.

3. Spot-talk can adapt other environments, and maintain or provide the user with equal visibility and a total concentration in all the environments.
